# EUROPEAN PATENT APPLICATION

(11) **EP 4 543 013 A1**
(43) Date of publication of application: **23.04.2025**
(21) Application number: 23822946.2
(22) Date of filing: 01.06.2023
(51) Int. Cl.: H04N 21/234

(54) **VIDEO DATA PROCESSING METHOD AND DEVICE, EQUIPMENT, SYSTEM, AND STORAGE MEDIUM**

(30) Priority: 16.06.2022 CN 202210687313
(71) Applicant: Beijing Zitiao Network Technology Co., Ltd., Beijing 100190 (CN)
(72) Inventor: YU, Di, Beijing 100028 (CN); WANG, Yue, Beijing 100028 (CN); FENG, Shouqiang, Beijing 100028 (CN); FU, Yi, Beijing 100028 (CN); YANG, Fan, Beijing 100028 (CN); ZHOU, Xin, Beijing 100028 (CN); CHEN, Lingyun, Beijing 100028 (CN); SONG, Bowen, Beijing 100028 (CN); LUO, Yihang, Beijing 100028 (CN); XIE, Yanzhe, Beijing 100028 (CN)
(74) Representative: Dentons UK and Middle East LLP
(86) International application number: PCT/CN2023/097892
(87) International publication number: WO 2023/241377

(57) **Abstract**

Embodiments of the present disclosure provide a video data processing method and device, equipment, a system, a storage medium, a computer program product, and a computer program. The method comprises: performing video capture operations by means of camera devices deployed in respective preset regions in a target location, and storing captured video data in a video database; according to first person recognition features, a server respectively acquiring, from the video database, person video clips corresponding to at least one preset region, wherein features of a person in the person video clips match the first person recognition features, the server further determining a target video template according to video style features, and generating a target video according to the target video template and the person video clips corresponding to the at least one preset region.

## Description

### CROSS REFERENCE OF RELEVANT APPLICATION

The present application claims priority to Chinese patent application No. 202210687313.3, filed before the State Intellectual Property Office of PRC on June 16, 2022, and entitled "Video Data Processing Method And Device, Equipment, System, And Storage Medium", which is incorporated herein by reference in its entirety.

### TECHNICAL FIELD

Embodiments of the present disclosure relate to the technical field of multimedia, and in particular to a video data processing method and device, equipment, system, a storage medium, a computer program product, and a computer program.

### BACKGROUND

As the development of the multimedia technology, more and more users would like to record life in a form of video. For example, when visiting scenic spots, exhibition venues and other places, a user may take a self-taken video at one or more scenic spots in the place, or ask others to help for video shooting. At the end of the tour, the user may edit videos of various scenic spots by using a video editing tool, and integrate the plurality of video clips after edited, thereby obtaining a complete tour video.

However, in the process above, the video shooting, editing and synthesis are processed manually, and are time-consuming. Moreover, this sets higher requirements for video editing skills.

### SUMMARY

Embodiments of the present disclosure provide a video data processing method and device, equipment, system, a storage medium, a computer program product, and a computer program.

In a first aspect, an embodiment of the present disclosure provides a method for video data processing applied in a server, the method including:
acquiring a first character identification characteristic corresponding to a first user, and acquiring a video style characteristic designated by the first user, the video style characteristic comprising at least one dimension of characteristic among text, tone, effect, or music;
acquiring a character video clip corresponding to at least one preset region in a target place from a video database according to the first character identification characteristic, wherein a character video clip corresponding to each preset region is obtained by a shooting apparatus deployed within the preset region, and a character characteristic in the character video clip is matched with the first character identification characteristic;
determining a target video template according to the video style characteristic, and generating a target video according to the target video template and the character video clip corresponding to the at least one preset region.

In a second aspect, an embodiment of the present disclosure provides a system for video data processing, including: a server and shooting apparatuses deployed within a plurality of preset regions in a target place, respectively;
the shooting apparatuses are configured for video shooting and storing shot video data in a video database;
the server is configured for:
   acquiring a first character identification characteristic corresponding to a first user, and acquiring a video style characteristic designated by the first user, the video style characteristic including at least one dimension of characteristic among text, tone, effect, or music; and
   acquiring a character video clip corresponding to at least one preset region in the target place from the video database according to the first character identification characteristic, wherein a character video clip corresponding to each preset region is obtained by a shooting apparatus deployed within the preset region, and a character characteristic in the character video clip is matched with the first character identification characteristic; and
   determining a target video template according to the video style characteristic, and generating a target video according to the target video template and a character video clip corresponding to the at least one preset region.

In a third aspect, an embodiment of the present disclosure provides a video data processing apparatus, including:
a first acquisition module for acquiring a first character identification characteristic corresponding to a first user, and acquiring a video style characteristic designated by the first user, the video style characteristic including at least one dimension of characteristic among text, tone, effect, or music;
a second acquisition module for acquiring a character video clip corresponding to at least one preset region from a video database according to the first character identification characteristic, wherein a character video clip corresponding to each preset region is obtained by a shooting apparatus deployed within the preset region, and a character characteristic in the character video clip is matched with the first character identification characteristic;
a generation module for determining a target video template according to the video style characteristic, and generating a target video according to the target video template and a character video clip corresponding to the at least one preset region.

In a fourth aspect, an embodiment of the present disclosure provides an electronic device, including: a processor and a memory;
the memory storing a computer executable instruction;
the processor executing the computer executable instruction so as to implement the method for video data processing in the first aspect.

In a fifth aspect, an embodiment of the present disclosure provides a computer readable storage medium, the computer readable storage medium storing a computer executable instruction therein, and implementing the method for video data processing in the first aspect when a processor executes the computer readable storage medium.

In a sixth aspect, an embodiment of the present disclosure provides a computer program product, including a computer executable instruction, and implementing the method for video data processing in the first aspect when the computer executable instruction is executed by a processor.

In a seventh aspect, an embodiment of the present disclosure provides a computer program, implementing the method for video data processing in the first aspect when the computer program is executed by a processor.

### BRIEF DESCRIPTION OF THE DRAWINGS

In order to more clearly illustrate the technical solutions in the embodiments of the present disclosure or in the existing technologies, the accompanying drawings to be used in the embodiments or the existing technologies will be briefly introduced below. It is obvious that the accompanying drawings described below are some embodiments of the present disclosure. For those skilled in the art, other accompanying drawings may be obtained based on these drawings without involving any creative efforts.
FIG. 1 is a schematic diagram of a system for video data processing provided by an embodiment of the present disclosure;
FIG. 2 is a schematic flow diagram of a method for video data processing provided by an embodiment of the present disclosure;
FIG. 3 is a schematic diagram of another system for video data processing provided by an embodiment of the present disclosure;
FIG. 4 is a schematic flow diagram of another method for video data processing provided by an embodiment of the present disclosure;
FIG. 5 is a schematic diagram of a further system for video data processing provided by an embodiment of the present disclosure;
FIG. 6 is a schematic diagram of a set of display interfaces provided by an embodiment of the present disclosure;
FIG. 7 is a schematic diagram of another set of display interfaces provided by an embodiment of the present disclosure;
FIG. 8 is a schematic diagram of a further set of display interfaces provided by an embodiment of the present disclosure;
FIG. 9 is a schematic diagram of the structure of an apparatus for video data processing provided by an embodiment of the present disclosure;
FIG. 10 is a schematic diagram of the structure of an electronic device provided by an embodiment of the present disclosure.

### DETAILED DESCRIPTION

In order to make the objects, technical solutions and advantages of the embodiments of the present disclosure clearer, the technical solutions in the embodiments of the present disclosure will be described clearly and completely below in conjunction with the accompanying drawings in the embodiments of the present disclosure. It is obvious that the described embodiments are only some of the embodiments of the present disclosure, rather than all of them. Based on the embodiments of the present disclosure, all other embodiments obtained by those skilled in the art without involving any creative efforts should fall within the scope of protection of the present disclosure.

In the technical solutions provided by the embodiments of the present disclosure, first, when a first user visits a target place, shooting apparatuses deployed within a plurality of preset regions in the target place may shoot the first user automatically. A server may automatically edit a character video clip corresponding to the first user from video data shot by respective shooting apparatuses according to the first character identification characteristic corresponding to the first user. The server may also determine a target video template according to a video style characteristic designated by the first user, and automatically synthesize respective character video clips according to the target video template, thereby obtaining a target video corresponding to the user's tour process.

It shall be noted that shooting is performed by a shooting apparatus on a user with the permission of the user in the embodiments of the present disclosure. Collection, storage, use, processing, transmission, provision, disclosure, and so forth of user images involved in the technical solutions of the present disclosure comply with pertinent laws and regulations, and do not violate the public order and good custom.

During the process above, video shooting, editing, and synthesis are automatically completed by a video data processing system, which saves the user's time and improves the video processing efficiency on the one hand, while reducing the requirements for the user's video editing skills on the other hand. Further, during the process of generating a target video, a video style characteristic designated by the user is further taken into consideration, and thus may satisfy different users' individual demands.

The technical solutions provided by the present disclosure are illustrated in detail by combining several specific embodiments below. The several embodiments below may be combined with each other, and no more details may be possibly repeated in some embodiments to any identical or similar concept or process.

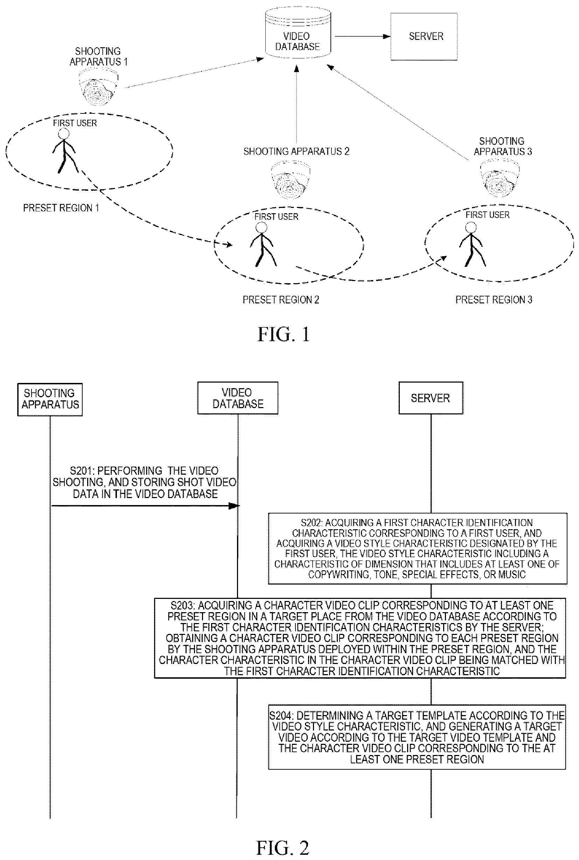

FIG. 1 is a schematic diagram of a video data processing system provided by an embodiment of the present disclosure. As illustrated in FIG. 1, the video data processing system includes: a server, a video database, and shooting apparatuses deployed within the plurality of preset regions in a target place, respectively. It is hypothesized in FIG. 1 that shooting apparatuses are deployed in three preset regions in the target place, respectively. That is, a shooting apparatus 1 is deployed within a preset region 1, a shooting apparatus 2 is deployed within a preset region 2, and a shooting apparatus 3 is deployed within a preset region 3.

Among them, the server may be a local server deployed within the target place, and may also be a cloud server. There may be one or more servers. Optionally, when there are the plurality of servers, some of the servers may be deployed locally, and the other servers may be deployed in the cloud.

The shooting apparatuses may be electronic devices with a video shooting function, including but not limited to digital camera, digital camcorder, webcam, interactive large screen, and so forth. One or more shooting apparatuses may be deployed within a preset region. When the plurality of shooting apparatuses are deployed within a preset region, the plurality of shooting apparatuses may perform video shooting from different angles, thereby ensuring that the user's highlights are captured.

The video database may be a database integrated in the server, or may be a database independent of the server. Respective shooting apparatuses are connected to the video database. The shooting apparatuses are used for shooting video data, and storing the video data in the video database. The server is connected to the video database, and the server may acquire video data shot by a shooting apparatus from the video database in light of needs.

In embodiments of the present disclosure, the target place includes but not limited to the following places: tourist attractions, exhibition venues, sports venues, etc. No definition is made on the quantity of the preset region(s) included in the target place in the embodiment of the present disclosure. Taking a tourist attraction as an example, each scenic spot region in the scenic spot serves as a preset region.

Based on the video data processing system illustrated in FIG. 1, FIG. 2 is a schematic flow diagram of a video data processing method provided by an embodiment of the present disclosure. As illustrated in FIG. 2, the method in the embodiment includes:
Step S201: performing the video shooting, and storing shot video data in the video database by a shooting apparatus.

By way of example, shooting apparatuses deployed in respective preset regions are configured to perform video shooting continuously, and store the video data shot in a video database. The video database is used for storing the video data shot by a plurality of shooting apparatuses.

When a user enters a preset region, a shooting apparatus deployed within the preset region may shoot the user. Accordingly, a character video clip corresponding to the user may be included in the video data shot by the shooting apparatus.

Step S202: acquiring a first character identification characteristic corresponding to a first user, and acquiring a video style characteristic designated by the first user by the server, the video style characteristic including at least one dimension of characteristic among text, tone, effect, or music.

Among them, the first character identification characteristic refers to a character characteristic for identifying a first user. The first character identification characteristic includes one or more items of the followings: a human face characteristic of the first user, a human body characteristic of the first user, and a clothing characteristic of the first user. The human body characteristic includes but not limited to: characteristics in respect of height, posture, and so forth. The clothing characteristic includes but not limited to: characteristics in respect of clothing color, clothing material, clothing type, and so forth.

It should be understood that when the first character identification characteristic includes more of human face characteristic, human body characteristic, and clothing characteristic, the first user is described more accurately by the first character identification characteristic, and the identification result of the first user based on the first character identification characteristic is more accurately in the subsequent steps.

No limitation is made on the manner of acquiring a first character identification characteristic and a video style characteristic by the server in the embodiment. In some possible implementations, the server may be communicatively connected with the terminal device of the first user. The user has access to the server via the applet of the terminal device, and uploads his/her self-taken image or historical image to the server such that the server can perform characteristic extraction on the self-taken image or historical image, thereby obtaining a first character identification characteristic corresponding to the first user.

The video style characteristic is used for describing a style of a target video finally generated, including at least one dimension of characteristic among text, tone, effect, or music, or music in the embodiment.

In a possible implementation, the user may send some keywords such as nostalgic tone, classic soundtrack, fashionable tone, dynamic effect, funny stickers for describing video style characteristics to the server through a terminal device. The server may determine a video style characteristic according to these keywords.

In another possible implementation, the user may select a video style that he/she likes among the plurality of preset video types, and send the video type that he/she likes to the server through the terminal device. The server determines the video style characteristic of a target video according to the video type that is selected by the user . For example, the plurality of video types include but not limited to: story type, funny humor type, education type, nostalgia type, fashion type and so forth. Among them, the story type of video has the following style characteristics: a video picture has text, the text contents in adjacent scenes are continuous; the video picture has warm colors and a soothing soundtrack. The funny humor type of video has the following style characteristics: the video picture has funny stickers, and the music contains laughter. The education type of video has the following style characteristics: the video picture includes informative text. For example, the scenery, historic sites, and so forth that appear in the current picture are introduced. The nostalgia type of video has the following style characteristics: the video picture has black and white, orange or turquoise tones with nostalgic music. The fashion type of video has the following style characteristics: with active music, bright video pictures and so forth.

In the embodiment, the target video finally generated is enabled to satisfy the user's preference in terms of dimensions such as text, tone, effect, and music through a video style characteristic designated by the user, which can improve the quality and satisfaction of the target video.

Step S203: acquiring a character video clip corresponding to at least one preset region in a target place from the video database according to the first character identification characteristics by the server; obtaining a character video clip corresponding to each preset region by the shooting apparatus deployed within the preset region, and the character characteristic in the character video clip being matched with the first character identification characteristic.

Among them, the at least one preset region above refers to a preset region visited by a user in the target place. The at least one preset region above may include all preset regions in the target place, and may also include some of the preset regions in the target place.

Taking FIG. 1 combined as an example, supposing that the first user visits a preset region 1, a preset region 2, and a preset region 3 within the target place, the server may acquire video data 1 shot by a shooting apparatus 1 within the preset region 1 from the video database, and intercept a character video clip 1 from the video data 1 according to the first character identification characteristic. The character in the character video clip 1 includes a first user or the character characteristic in the character video clip 1 is matched with the first character identification characteristic. The character video clip 1 is a character video clip corresponding to the preset region 1. By using a similar manner, the server may further acquire a character video clip corresponding to the preset region 2 and a character video clip corresponding to the preset region 3 from the video database.

Step S204: determining a target template according to the video style characteristic, and generating a target video according to the target video template and the character video clip corresponding to the at least one preset region.

Among them, the video template refers to a frame in a fixed format for making a video rapidly. The video template may include one or more items of the followings: the plurality of slot positions for filling video materials, effect materials corresponding to each slot position, transition materials between adjacent slot positions, and so forth.

In the embodiment, the server may be provided with the plurality of preset video templates, and different video style characteristics may correspond to different preset video templates. In this way, the server may select a corresponding preset video template as a target video template according to a character style characteristic designated by the first user, and synthesize a character video clip corresponding to the at least one preset region above by using the target video template, thereby obtaining a target video. The process of visiting a target place by the first user is recorded in the target video.

In a possible implementation, the server may also determine a target video template in the following ways:
(1) determining a first preset video template that satisfies a video style characteristic in the plurality of preset video templates according to the video style characteristic, the first preset video template including the plurality of slot positions for filling video materials, effect materials corresponding to respective slot positions, and transition materials for linking adjacent slot positions.
(2) obtaining a shooting characteristic by analyzing a character video clip corresponding to the at least one preset region, the shooting characteristic including one or more items of the followings: the number of character video clips, time for shooting (e.g., morning, afternoon, spring, summer, autumn, winter, etc.), weather (e.g., sunny, cloudy, raining, snowy, etc.), character type (e.g., accessory type, hairstyle type, clothing type, dress type, etc.).
(3) obtaining a target video template by adjusting the first preset video template according to the shooting characteristic.

Among them, ways of adjusting the first preset video template include but not limited to: adjusting the quantity/number of slot position(s) in the first preset video template such that the quantity/number of slot position(s) is consistent with that of character video clip(s); adjusting the video parameters of transition materials, e.g., contrast, brightness, and chroma such that the visual effects of the transition materials are similar to that of the character video clip(s); adjusting the effects corresponding to the slot position(s) such that the effects satisfy the preference corresponding to a character type.

It should be understood that a first preset video template is adjusted according to a shooting characteristic such that the adjusted target video template more satisfies the shooting characteristic this time on the premise that the adjusted target video template satisfies a video style characteristic designated by the first user. Accordingly, generating a target video by using a target video template can improve the quality of the target video.

In a possible implementation, when the target video is generated by using a target video template, the following manner may be used: determining a corresponding relationship between a character video clip corresponding to the at least one preset region and each slot position in the target video template, i.e., determining which character video clip for filling which slot position. Further, the character video clip corresponding to the at least one preset region is filled into a corresponding slot position of the target video template according to the corresponding relationship, thereby obtaining a target video.

It should be understood that as the target video template is determined according to the video style characteristic designated by the first user, the target video generated by using the target video template satisfies a user's video style characteristic. Accordingly, different users' requirements for style may be satisfied.

It should be noted that no strict definition is made on the time for executing the respective steps above in the embodiment. Some possible examples are provided below.

In an example, shooting apparatuses deployed within respective preset regions perform Step S201 continuously. Before the first user starts to visit a target place, the server may perform Step S202. During the first user's visit to the target place, and after the first user visits a preset region, the server may perform Step S203. After the first user ends his/her visit to the target place, the server may perform Step S204.

In another example, shooting apparatuses deployed within respective preset regions perform Step S201 continuously. Before the first user starts to visit a target place, the server may perform Step S202. After the first user ends his/her visit to the target place, the server may perform Step S203 and Step 204. As an alternative, after the first user ends his/her visit to the target place, the server performs Step S202 to Step 204.

The method for video data processing provided by embodiments of the present disclosure may include: performing a video shooting through the shooting apparatuses deployed within respective preset regions in the target place, and storing the video data shot in the video database, the server acquiring a character video clip corresponding to at least one preset region from the video database according to the first character identification characteristic, a character characteristic in the character video clip being matched with the first character identification characteristic; furthermore, the server determines a target video template according to the video style characteristic, and generates a target video according to the target video template and a character video clip corresponding to the at least one preset region. In the processes above, video shooting, editing, and synthesis are completed by a system automatically, which saves the user's time, and improves the video processing efficiency on the one hand, while reducing the requirements for the user's video editing skills on the other hand. A character video clip corresponding to the first user is obtained through matching with the first character identification characteristic in the video database, improving the accuracy of the acquired character video clip, thereby improving the accuracy of the target video. Further, during generation of the target video, a video style characteristic designated by the user is also taken into consideration such that the target video satisfies the user's preference in terms of dimensions such as text, tone, effect, and music, and can improve the quality and satisfaction of the target video, and satisfy different users' individual requirements.

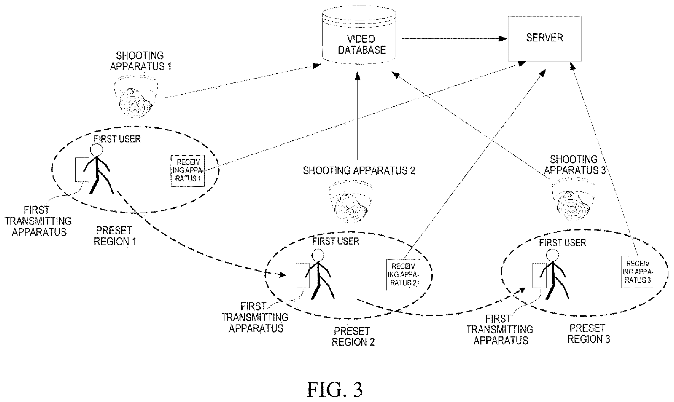

Based on the embodiments illustrated in FIG. 1 and FIG. 2 above, more detailed illustrations are made on the technical solutions of the present disclosure in conjunction with FIG. 3 to FIG. 8.

FIG. 3 is a schematic diagram of another video data processing system provided by an embodiment of the present disclosure. As illustrated by FIG. 3, the video data processing system provided by the embodiment further includes: a first transmitting apparatus carried by the first user and receiving apparatuses deployed within respective preset regions in the target place.

Among them, the first transmitting apparatus is configured for transmitting a first radio frequency signal. Optionally, the first transmitting apparatus may be a portable apparatus such as a bracelet and glasses. The first transmitting apparatus may transmit a first radio frequency signal continuously, and may also transmit the first radio frequency signal periodically. The first radio frequency signal may include an identifier of the first transmitting apparatus. There is a binding relationship between the first transmitting apparatus and the first user. That is, the transmitting apparatuses carried by different users have different identifiers.

The receiving apparatus may be used for receiving a first radio frequency signal sent by the first transmitting apparatus. The receiving apparatus has a receiving range. By way of example, with reference to FIG. 1, when the first user has access to a preset region 1 with the first transmitting apparatus, the receiving apparatus 1 may receive a first radio frequency signal sent by the first transmitting apparatus. When the first user has access to a preset region 2 with the first transmitting apparatus, the receiving apparatus 2 may receive a first radio frequency signal sent by the first transmitting apparatus. When the first user has access to a preset region 3 with the first transmitting apparatus, the receiving apparatus 3 may receive a first radio frequency signal sent by the first transmitting apparatus.

The receiving apparatus within each preset region is communicatively connected with the server. After receivingthe first radio frequency signal sent by the first transmitting apparatus, the receiving apparatus may send first information to the server. Among them, the first information includes: a reception time of the first radio frequency signal. It should be understood that as for the reception time of the first radio frequency signal, the receiving apparatus may give an instruction: the first user appears within a preset region corresponding to the receiving apparatus at this time. Correspondingly, the first user may be shot by a shooting apparatus within the preset region.

Optionally, the first information may further include an identifier of the first transmitting apparatus. As there is a corresponding relationship between the transmitting apparatus and the user, the server may be informed of which user appears within the preset region according to the identifier of the first transmitting apparatus.

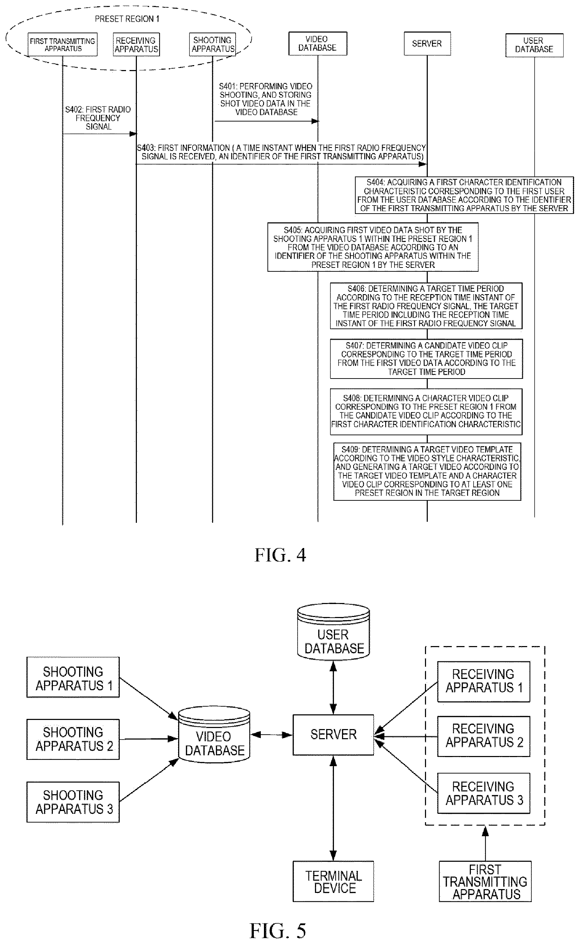

Based on the video data processing system illustrated in FIG. 3, FIG. 4 is a schematic flow diagram of a further method for video data processing provided by an embodiment of the present disclosure. As illustrated in FIG. 4, the method of the embodiment includes:
Step S401: performing the video shooting, and storing shot video data in the video database by a shooting apparatus.

During the first user's tour of a target place, when the first user enters a preset region, the video data processing system executes the following Steps S402 to S406. Illustration is made with the first user who enters a preset region 1 as an example below.

Step S402: transmitting a first radio frequency signal by the first transmitting apparatus, the first radio frequency signal including an identifier of the first transmitting apparatus.

A receiving apparatus within the preset region 1 receives a first radio frequency signal.

Step S403: transmitting first information to the server by a receiving apparatus within the preset region 1, the first information including a reception time of the first radio frequency signal and an identifier of the first transmitting apparatus.

Step S404: acquiring a first character identification characteristic corresponding to the first user from the user database according to the identifier of the first transmitting apparatus by the server.

Among them, the user database is used for storing a character identification characteristic corresponding to the plurality of users and an identifier of a transmitting apparatus corresponding to the plurality of users.

Further, the server may acquire a character video clip corresponding to the preset region 1 from the video database according to the reception time of the first radio frequency signal and the first character identification characteristic. For details, reference can be made to the description of Steps S405 to S408.

Step S405: acquiring first video data shot by the shooting apparatus 1 within the preset region 1 from the video database according to the identifier of the shooting apparatus within the preset region 1 by the server.

Step S406: determining a target time period according to the reception time of the first radio frequency signal by the server, the target time period including the reception time of the first radio frequency signal.

For example, supposing that the reception time of the first radio frequency signal is 12:00, this indicates that the first user appears at 12:00 within the preset region 1. In this case, it can be determined that the target time period is 11:59 ~ 12:04.

It should be understood that during the first user's tour within a preset region 1, the receiving apparatus 1 possibly receives the plurality of first radio frequency signals. Correspondingly, the receiving apparatus 1 may transmit much first information to the server. As such, the server may acquire a reception time of the plurality of first radio frequency signals. Accordingly, the server may determine a target time period according to the reception time of the plurality of first radio frequency signals. The target time period includes the reception time of the plurality of first radio frequency signals.

Step S407: determining a candidate video clip corresponding to the target time period from the first video data according to the target time period by the server.

It should be understood that each video frame in the first video data has a corresponding shooting timestamp. Respective video frames shot within a target time period may be intercepted from the first video data for use as a candidate video clip according to the shooting timestamp.

Step S408: determining a character video clip corresponding to the preset region 1 from the candidate video clip according to the first character identification characteristic by the server.

By way of example, as for each video frame in the candidate video clip, whether there is a character in the video frame may be judged. In the event that there is a character, a character characteristic in the video frame is matched with the first character identification characteristic so as to identify whether the characters in the video frame include a first user. Supposing that the candidate video clip includes 1,000 frames, wherein the characters in 350-750 video frames include a first user, the 350-750 video frames will be used as character video clips.

In embodiments of the present disclosure, during editing of a character video clip, the server first performs rough editing on first video data according to the reception time of the first radio frequency signal to obtain a candidate video clip, and then performs fine editing on the candidate video clip according to the first character identification characteristic, which improves the accuracy of the character video clip on the one hand, while reducing the difficulty in identifying a large amount of video data and the amount of calculating the same on the other hand.

In a possible implementation, Step S408 may include: capturing at least one key video clip in the candidate video clip according to the first character identification characteristic, a character characteristic in the key video clip being matched with the first character identification characteristic, that is, a character in each key video clip including a first user; determining quality scores of respective key video clips according to one or more items of information among expressions, motions, gestures of a character in the respective key video clips; determining a key video clip with the highest quality score as a character video clip corresponding to the preset region 1.

It should be understood that use of the mode may effectively filter any character video clip with low quality such as poor expression, blurred motion, and closed eyes, thereby improving the quality of the character video clip. In some scenarios, those character video clips obtained through filtering above may be referred to as highlight video clips.

It should be understood that when the first user enters a preset region 2 and a preset region 3, the process of executing the video data processing system is similar to that of the Steps S402 to S408 above. No more details will be repeated here.

Step S409: determining a target video template according to the video style characteristic, and generating a target video according to the target video template and a character video clip corresponding to at least one preset region in the target region.

It should be understood that the specific implementing manner of the Step S409 is similar to that of Step S204 in the preceding embodiment. No more details will be repeated here.

FIG. 5 is a schematic diagram of a further video data processing system provided by an embodiment of the present disclosure. As illustrated by FIG. 5, on the basis of the system illustrated by FIG. 3, the video data processing system provided by the embodiment further includes: a terminal device of the first user.

In the embodiment, the terminal device may be communicatively connected with the server, and the terminal device may send registration information to the server, the registration information including: a first character identification characteristic corresponding to the first user and an identifier of the first transmitting apparatus. The server may store the first character identification characteristic and the identifier of the first transmitting apparatus in the user database. Optionally, after generating a target video, the server may further push the target video to the terminal device.

Based on the system illustrated by FIG. 5, taking the first user's visit to a scenic spot X as an example below, the process of video data processing is illustrated. Three stages, i.e., prior to tour, during tour, and after tour, are divided below for description.

### Stage 1: prior to tour

After entering the scenic spot X, the first user may get a first transmitting apparatus at the entrance of the scenic spot. For example, the first transmitting apparatus may be a bracelet, glasses, and so forth. The first transmitting apparatus is arranged with an identification code which includes but not limited to: bar code, QR code, and so forth. The identification code is associated with the identifier of the first transmitting apparatus, and is also associated with the applet of the scenic spot X.

The terminal device may obtain the identifier of the first transmitting apparatus by scanning a QR code. Moreover, the terminal device enters the applet of the scenic spot X, and presents a registration page after scanning the QR code, the registration page including a characteristic collection control. In response to detection of the first user's input operation on the characteristic collection control, the terminal device presents a characteristic collection page, collects an image of the first user in the characteristic collection page, and performs characteristic extraction on the image above, thereby obtaining a first character identification characteristic corresponding to the first user.

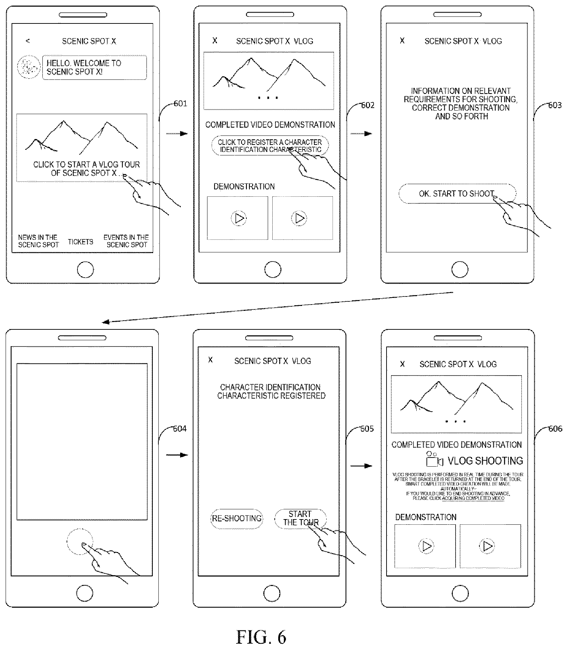

Illustration is made below by combining FIG. 6 which is a schematic diagram of a set of display interfaces provided by an embodiment of the present disclosure. As illustrated by FIG. 6, in response to scanning of the identification code on the first transmitting apparatus by the terminal device, the terminal device enters the applet of the scenic spot X, and presents a welcome page 601. In response to the first user's click of "click to start a VLOG tour of scenic spot X", the terminal device presents a registration page 602 on the welcome page 601. In response to the first user's click of "click to register a character identification characteristic" (i.e., a characteristic collection control), the terminal device may present a characteristic collection page 604 on the registration page 602, and collect an image of the first user on the characteristic collection page 604.

Optionally, on the registration page 602, in response to the first user's click of "click to register a character identification characteristic" (i.e., a characteristic collection control), the terminal device may also present a prompt page 603 first to prompt information such as relevant requirements for shooting by the first user on the prompt page 603, correct demonstration, and so forth such that the first user is capable of shooting an image according to the relevant requirements. After the first user clicks the "OK. Start to shoot" control, the terminal device presents a characteristic collection page 604, and collects an image of the first user on the characteristic collection page 604.

After collecting an image of the first user, the terminal device may perform characteristic extraction on the image of the first user, including but not limited to: human face characteristic extraction, human body characteristic extraction, clothing characteristic extraction, and so forth, thereby obtaining a first character identification characteristic of the first user.

Further, the terminal device may send registration information to the server, the registration information including an identifier of the first transmitting apparatus and a first character identification characteristic. In response to receipt of the registration information, the server stores the identifier of the first transmitting apparatus and the first character identification characteristic in the user database. Furthermore, the server may send completed registration information to the terminal device. In response to the receipt of the completed registration information, the terminal device presents a page 605. The first user may click the "start the tour" control on the page 605, triggering the terminal device to display a tour page 606. The first user is prompted on the tour page 606 as follows: "VLOG shooting is performed in real time during the tour. After the bracelet is returned at the end of the tour, smart completed video creation will be made automatically. If you would like to end shooting in advance, please click acquiring the completed video.

So far, stage 1 is ended. At stage 1, the process of user registration is completed through interaction between the terminal device and the server. The server stores a first character identification characteristic corresponding to the first user and an identifier of the first transmitting apparatus in the user database for use in the subsequent stages. It can be understood that what is stored in the user database in the embodiment is the first character identification characteristic corresponding to the first user, which can avoid leakage of user privacy information.

### Stage 2: during tour

At this stage, the first user carries a first transmitting apparatus for tour. Supposing when the first user pays a visit to a preset region 1, the receiving apparatus 1 within the preset region 1 may receive a first radio frequency signal sent by the first transmitting apparatus, and send first information to the server according to the first radio frequency signal. The first information includes a reception time of a first radio frequency signal and an identifier of the first transmitting apparatus.

After receiving the first information, the server may acquire a first character identification characteristic corresponding to the first user from the user database according to the identifier of the first transmitting apparatus, and may acquire a time for the first user who appears in the preset region 1 according to the reception time of the first radio frequency signal. Accordingly, the server may acquire a character video clip corresponding to the preset region 1 from the video database according to the time for the first user who appears in the preset region 1 and the first character identification characteristic. It should be understood that as for the process of editing a character video clip, reference can be made to the relevant description of the preceding embodiments. No more details will be repeated here.

It should be understood that when the first user pays a visit to other preset regions, those modes similar to the above are used to process video data. Hence, during the first user's tour process, the server may obtain a character video clip corresponding to respective preset regions toured by the first user through editing.

### Stage 3: after tour

At the stage, the server synthesizes character video clips corresponding to respective preset regions toured by the first user, thereby obtaining a target video.

In an exemplary scenario, the server may receive a completed video instruction sent by a receiving apparatus within a target preset region, wherein the target preset region is a preset region among the plurality of preset regions in the target place. By way of example, the target preset region may be a preset region corresponding to the exit of the target place.

For example, when a user arrives at the exit of the scenic spot X after tour, a receiving apparatus arranged at the exit of the scenic spot X may receive a first radio frequency signal sent by the first transmitting apparatus. After receiving the first radio frequency signal, the receiving apparatus sends to the server a completed video instruction which includes an identifier of the first transmitting apparatus.

In response to receipt of the completed video instruction by the server, the server is triggered to determine a target video template according to a video style characteristic designated by the first user, and generate a target video according to the target video template and a character video clip according to at least one preset region toured by the user. Reference can be made to the detailed description of Step S204 or S410 in the preceding embodiment for details. No more details will be repeated here.

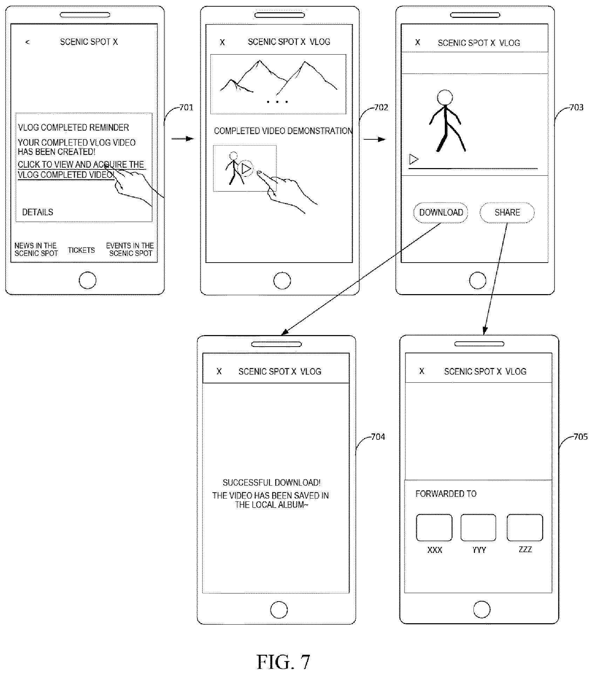

After the server generates the target video, the server may send the target video to the terminal device of the first user. After receiving the target video, the terminal device may play a target video, download the target video, and share the target video. Illustration is made by combining FIG. 7 below.

FIG. 7 is a schematic diagram of another set of display interfaces provided by an embodiment of the present disclosure. As illustrated by FIG. 7, the terminal device displays notify information in an information interface 701 in response to receipt of a target video sent from the server by the terminal device, the notify information including link information regarding the target video. In response to the first user's click operation on the link information above on the information page 701, the terminal device presents a video display page 702, and displays the cover of the target video on the video display page 702. In response to detection of the first user's click operation on the cover above, the terminal device presents a video play page 703, and plays a target video on the video play page 703.

Optionally, as illustrated by FIG. 7, the video play page 703 may include a download control. In response to detection of the first user's click operation on the download control, the terminal device downloads a target video to a preset storage space such as local album. After downloading is completed, the terminal device may display prompt information corresponding to successful downloading as illustrated on page 704.

Optionally, as illustrated by FIG. 7, the video play page 703 may include a share control. In response to detection of the first user's click operation on the share control, the terminal device presents a share page 705. Share entries such as third-party software, websites, applications may be displayed on the share page 705. The terminal device may send a target video to a terminal device corresponding to other users according to a share operation inputted by the first user on the share page 705.

In another exemplary scenario, the server may receive a completed video instruction sent by a terminal device of a first user.

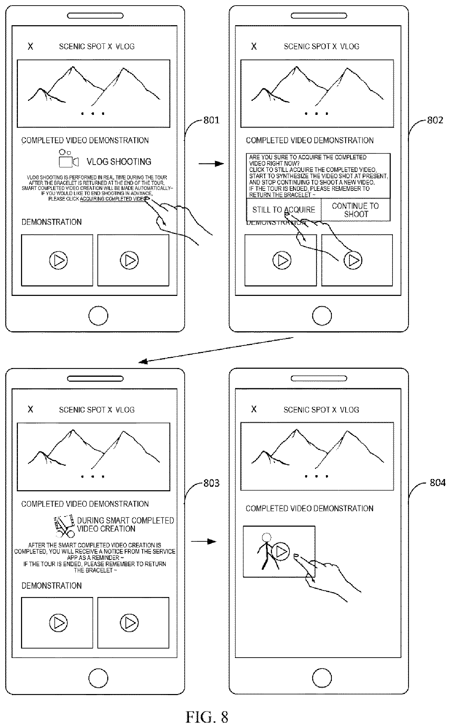

Reference is made to FIG. 8 for illustrations, FIG. 8 is a schematic diagram of a further set of display interfaces provided by an embodiment of the present disclosure. As illustrated by FIG. 8, after visiting some of preset regions in the target place, the first user may click "acquire the completed video" on a tour page 801 (the same as the browse page 606 in FIG. 6). In response to the first user's click operation of "acquire the completed video", the terminal device displays a confirm page 802. Prompt information, namely, "Are you sure to acquire the completed video right now? Click to still acquire the completed video, start to synthesize the video shot at present, and stop continuing to shoot a new video. If the tour is over, please remember to return the bracelet", is displayed on the confirm page 802.

In response to the first user's click of "still to acquire" on the confirm page 802, the terminal device sends the completed video instruction to the server, thereby triggering the server to determine a target template according to a video style characteristic designated by the first user, and generating a target video according to the target video template and a character video clip corresponding to at least one preset region visited by the user. For details, reference can be made to the detailed description of Step S204 or Step S410 in the preceding embodiments. No more details will be repeated here.

Optionally, after the first user clicks "still to acquire", the terminal device may display a prompt page 803 so as to prompt a smart completed video creation to the user. After generating a target video, the server sends the target video to the terminal device. The terminal device presents a video display page 804 in response to receipt of the target video, and displays the cover of the target video on the video display page 804. It should be understood that the video display page 804 is the same as a page 702 in FIG. 7. The first user may play a target video by clicking the cover, and may also download and share the target video. For the specific implementing manner, reference can be made to the detailed description of the embodiment illustrated in FIG. 7. No more details will be repeated here.

On the confirm page 802, if the first user clicks "continue to shoot", the terminal device continues to display a browse page 801, and the first user may continue the subsequent browse processes.

Based on the technical solutions of the embodiments of the present disclosure, video shooting, editing, and synthesis are automatically completed by a video data processing system, which saves the user's time and improves the video processing efficiency on the one hand, while reducing the requirements for the user's video editing skills on the other hand. Further, during the process of generating a target video, a video style characteristic designated by the user is further taken into consideration, and thus may satisfy different users' individual demands.

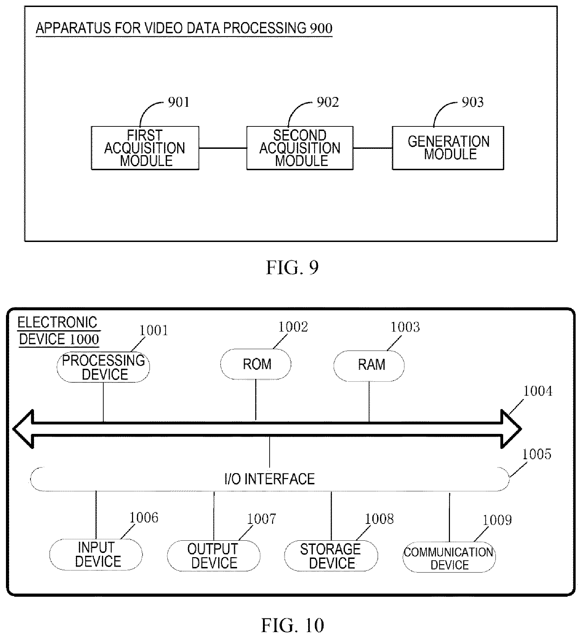

FIG. 9 is a schematic diagram of the structure of an apparatus for video data processing provided by an embodiment of the present disclosure. The apparatus may be in a software and/or hardware form. As illustrated in FIG. 9, the video data processing apparatus 900 provided in the embodiment includes: a first acquisition module 901, a second acquisition module 902, and a generation module 903, where
the first acquisition module 901 is used for acquiring a first character identification characteristic corresponding to a first user, and acquiring a video style characteristic designated by the first user, the video style characteristic comprising at least one dimension of characteristic among text, tone, effect, or music;
the second acquisition module 902 is used for acquiring a character video clip corresponding to at least one preset region in the target place from the video database from the video database according to the first character identification characteristic, wherein a character video clip corresponding to each preset region is obtained through shooting by a shooting apparatus deployed within the preset region, and a character characteristic in the character video clip is matched with the first character identification characteristic;
the generation module 903 is used for determining a target video template according to the video style characteristic, and generating a target video according to the target video template and a character video clip according to the at least one preset region.

In a possible implementation, the apparatus of the embodiment further includes: a receiving module;
the receiving module is used for receiving first information sent by a receiving apparatus deployed within the first preset region for any first preset region among the at least one preset region, the first information including a reception time of a first radio frequency signal, the first information being sent to the server after the receiving apparatus receives the first radio frequency signal, the first radio frequency signal being sent by a first transmitting apparatus carried by the first user;
a second acquisition module 902 is specifically used for: acquiring a character video clip corresponding to the first preset region from the video database according to the reception time of the first radio frequency signal and the first character identification characteristic.

In a possible implementation, the second acquisition module 902 is specifically used for:
acquiring first video data shot by a shooting apparatus within the first preset region from the video database according to an identifier of the shooting apparatus within the first preset region;
determining a target time period according to a reception time of the first radio frequency signal, the target time period including the reception time of the first radio frequency signal;
determining a candidate video clip corresponding to the target time period from the first video data according to the target time period;
determining the character video clip corresponding to the preset region from the candidate video clip according to the first character identification characteristic.

In a possible implementation, the second acquisition module 902 is specifically used for:
capturing at least one key video clip in the candidate video clip according to the first character identification characteristic, a character characteristic in the key video clip being matched with the first character identification characteristic;
determining quality scores of respective key video clips according to one or more items of information among expressions, motions, gestures of a character in the respective key video clips;
determining a key video clip with the highest quality score as a character video clip corresponding to the first preset region;

In a possible implementation, the first information further includes: an identifier of the first transmitting apparatus; the first acquisition module 901 is specifically used for:
acquiring the first character identification characteristic from a user database according to an identifier of the first transmitting apparatus; wherein the user database is used for storing a character identification characteristic corresponding to a plurality of users and an identifier of a transmitting apparatus corresponding to the plurality of users;

In a possible implementation, the receiving module is further used for: receiving registration information sent by a terminal device of the first user, the registration information including: an identifier of the first transmitting apparatus and the first character identification characteristic; storing the identifier of the first transmitting apparatus and the first character identification characteristic in the user database.

In a possible implementation, the generation module 903 is specifically used for:
determining a first preset video template that satisfies the video style characteristic in the plurality of preset video templates according to the video style characteristic, the first preset video template including the plurality of slot positions for filling video materials, effect materials corresponding to respective slot positions, and transition materials for linking adjacent slot positions;
obtaining a shooting characteristic by analyzing a character video clip corresponding to the at least one preset region, the shooting characteristic including one or more items of the followings: quantity of character video clip(s), time for shooting, weather, and character type;
adjusting the first preset video template according to the shooting characteristic, thereby obtaining the target video template.

In a possible implementation, the generation module 903 is specifically used for:
determining a corresponding relationship between a character video clip corresponding to the at least one preset region and each slot position in the target video template;
filling a character video clip corresponding to the at least one preset region in a corresponding slot position of the target video template according to the corresponding relationship, thereby obtaining the target video.

In a possible implementation, the apparatus further includes: a receiving module; the receiving module being used for:
receiving a completed video instruction sent by a terminal device of the first user; or
receiving the completed video instruction sent by a receiving apparatus within a target preset region, wherein the target preset region is a preset region among the plurality of preset regions.

In a possible implementation, the apparatus further includes a sending module for sending the target video to a terminal device of the first user.

An apparatus for video data processing provided by the embodiment may be used for executing the video data processing method executed by a server in any process embodiment above, and the implementing principles and the technical effects thereof are similar. No more details will be repeated here.

For implementing the embodiments above, an embodiment of the present disclosure further provides an electronic device.

FIG. 10 illustrates a schematic diagram of the structure of an electronic device 1000 for implementing an embodiment of the present disclosure. The electronic device 1000 may be a terminal device or a server. Among them, the terminal device may include but not limited to mobile terminals such as mobile phone, laptop, digital broadcast receiver, Personal Digital Assistant (PDA for short), tablet (Portable Android Device, PAD for short), Portable Media Player (PMP for short), and in-vehicle terminal (e.g., in-vehicle navigation terminals) and fixed terminals such as digital TV and desktop computer. The electronic device illustrated in FIG. 10 is only an example, and shall not bring any restriction to the functions and scope of use in the embodiments of the present disclosure.

As illustrated in FIG. 10, the electronic device 1000 may include a processing device 1001 (e.g., central processing unit, graphics processing unit and so forth) which may perform various appropriate actions and treatments according to a program stored in a Read Only Memory (ROM for short) 1002 or a program loaded to a Random Access Memory (RAM for short) 1003 from a storage device 1008. Various programs and data required for operating the electronic device 1000 are also stored in the RAM 1003. The processing device 1001, the ROM 1002, and the RMA 1003 are interconnected through a bus 1004. An input/output (I/O) interface 1005 is also connected to the bus 1004.

Generally, the following apparatuses may be connected to the I/O interface 1005: including input devices 1006 such as touch screen, touchpad, keyboard, mouse, camera, microphone, accelerometer, and gyroscope; output devices 1007 such as Liquid Crystal Display (LCD for short), speaker, and vibrator; storage devices 1008 such as tape and hard disk; and a communication device 1009. The communication device 1009 may allow wireless or wired communication of the electronic device 1000 with other devices so as to exchange data. Although FIG. 10 illustrates an electronic device 1000 with various apparatuses, it should be understood that it is not necessary to implement or have all apparatuses shown. It is possible to alternatively implement or have more or fewer apparatuses.

Especially, according to the embodiments of the present disclosure, the process described by referring to the flow diagram above may be implemented as a computer software program. For example, the embodiments of the present disclosure include a computer program product, including a computer program carried on a computer readable medium, the computer program including a program code for executing the method shown in the flow diagram. In such embodiments, the computer program may be downloaded and mounted from the internet through the communication device 1009 or mounted from the storage device 1008 or mounted from the ROM 1002. When the computer program is executed by the processing device 1001, the method defined by the embodiments of the present disclosure above is executed.

It should be noted that the computer readable medium of the present disclosure above may be a computer readable signal medium or a computer readable storage medium or any combination of both of them above. The computer readable storage medium, for example, may be but not limited to electric, magnetic, optical, electromagnetic, infrared, or semiconductor systems, apparatuses, or devices or any combinations of the above. More specific examples of computer readable storage media may include but not limited to an electrical connection with one or more wires, a portable computer disk, a hard disk, a random access memory (RAM), a read-only memory (ROM), an electrically erasable programmable read-only memory (EEPROM for short or a flash memory), an optical fiber, a compact disc read-only memory (CD-ROM for short), a light storage device, a magnetic storage device, or any appropriate combinations above. In the present disclosure, the computer readable storage medium may be any tangible medium including or storing a program which may be instructed to execute use of a system, an apparatus or a device or use thereof in combination. Moreover, in the present disclosure, the computer readable signal medium may include data signals transmitted in a base band or as a part of carrier waves, carrying a computer readable program code. Various forms may be adopted for such data signals transmitted, including but not limited to an electromagnetic signal, an optical signal or any appropriate combinations of the above. The computer readable signal medium may also be any computer readable medium in addition to the computer readable storage medium. The computer readable signal medium may send, disseminate or transmit a program for executing use of a system, an apparatus or a device or use thereof in combination by an instruction. The program code included on the computer readable medium may be transmitted by any appropriate medium including but not limited to an electric wire, an optical cable, Radio Frequency (RF for short) and so forth, or any appropriate combinations of the above.

The computer readable medium above may be included in the electronic device above, and may also exist separately, not assembled in the electronic device.

The computer readable medium above is carried with one or more programs which, when executed by the electronic device, enable the electronic device to execute the method illustrated in the embodiments above.

The computer program code for executing the operation of the present disclosure may be written with one or more program design languages or combinations thereof. The program design languages above include object-oriented program design languages such as Java, Smalltalk, and C++, and also include conventional procedural program design languages such as "C" language or similar program design languages. The program code may be executed completely on a user's computer, executed partially on the user's computer, executed as an independent software package, executed partially on the user's computer and partially on a remote computer, or executed completely on the remote computer or a server. Under the circumstance where a remote computer is involved, the remote computer may be connected to a user's computer through any type of networks including Local Area Network (LAN for short) or Wide Area Network (WAN for short), or may be connected to an external computer (e.g., connected through an internet by using an internet service provider).

The flow diagrams and block diagram in the accompanying drawings illustrate the system architecture, functions, and operations that are possibly implemented according to the system, method, and computer program product in respective embodiments of the present disclosure. In this point, each block in the flow diagrams or block diagram may represent a part of a module, a program block, or a code, the part of the module, the program block, or the code including one or more executable instructions for implementing the specified logical functions. It should also be noted that in some alternative implementations, the functions labeled in a block may occur in a different order from that labelled in the accompanying drawings. For example, as a matter of fact, two blocks which are indicated in succession may be basically executed in parallel, and they may also be executed in an opposite order sometimes, which depends on the functions involved. It should also be noted that each block in a block diagram and/or flow diagram and a combination of blocks in the block diagram and/or flow diagram may be implemented with a dedicated hardware-based system for executing specified functions or operations or may be implemented with a combination of special-purpose hardware and computer instructions.

Units involved as described in the embodiments of the present disclosure may be implemented by means of software, and may also be implemented by means of hardware, wherein names of the units do not constitute definitions of the units under certain circumstances. For example, a first acquisition unit may also be described as "a unit for acquiring at least two internet protocol addresses".

The functions described herein above may be at least executed partially by one or more hardware logic units. For example, non-limitedly, exemplary hardware logic units that may be used include: a Field Programmable Gate Array (hereinafter referred to as FPGA), an Application Specific Integrated Circuit (hereinafter referred to as ASIC), an Application Specific Standard Product (hereinafter referred to as ASSP), a System on Chip (hereinafter referred to as SOC), a Complex Programmable Logic Device (hereinafter referred to as CPLD), and so forth.

In the context of the present disclosure, the machine readable media may be tangible media, and may also include or store programs for instructions to execute use of a system, an apparatus or a device or for instructions to execute use in combination with the system, apparatus or device. The machine executable media may be machine readable signal media or machine readable storage media. The machine readable media may include but not limited to electronic, magnetic, optical, electromagnetic, infrared, or semiconductor systems, apparatuses, or devices, or any proper combinations of the contents above. More specific examples of machine readable media will include an electrical connection with one or more wires, a portable computer disk, a hard disk, a random access memory (RAM), a read-only memory (ROM), an electrically erasable programmable read-only memory (EEPROM or a flash memory), an optical fiber, a compact disc read-only memory (CD-ROM), a light storage device, a magnetic storage device, or any proper combinations of the contents above.

In a first aspect, according to one or more embodiments of the present disclosure, provided with is a video data processing method applied in a server, the method including:
acquiring a first character identification characteristic corresponding to a first user, and acquiring a video style characteristic designated by the first user, the video style characteristic comprising at least one dimension of characteristic among text, tone, effect, or music;
acquiring a character video clip corresponding to the at least one preset region from the video database according to the first character identification characteristic, wherein a character video clip corresponding to each preset region is obtained through shooting by a shooting apparatus deployed within the preset region, and a character characteristic in the character video clip is matched with the first character identification characteristic;
determining a target video template according to the video style characteristic, and generating a target video according to the target video template and the character video clip corresponding to the at least one preset region.

According to one or more embodiments of the present disclosure, for a first preset region in the at least one preset region, before acquiring the character video clip corresponding to the first preset region from the video database according to the first character identification characteristic the method further comprises:
receiving first information sent by a receiving apparatus deployed within the first preset region, the first information including a reception time of a first radio frequency signal; the first information being sent to the server after the receiving apparatus receives the first radio frequency signal which is sent by the first transmitting apparatus carried by the first user;
acquiring a character video clip corresponding to the preset region from a video database according to the first character identification characteristic;
acquiring the character video clip corresponding to the first preset region from the video database according to a reception time of the first radio frequency signal and the first character identification characteristic.

According to one or more embodiments of the present disclosure, acquiring a character video clip corresponding to the first preset region from the video database according to a reception time of the first radio frequency signal and the first character identification characteristic includes:
acquiring first video data shot by a shooting apparatus within the first preset region from the video database according to an identifier of a shooting apparatus within the first preset region;
determining a target time period according to a reception time of the first radio frequency signal, the target time period including the reception time of the first radio frequency signal;
determining a candidate video clip corresponding to the target time period from the first video data according to the targe time period;
determining the character video clip corresponding to the firs preset region from the candidate video clip according to the first character identification characteristic.

According to one or more embodiments of the present disclosure, determining a character video clip corresponding to the first preset region from the candidate video clip according to the first character identification characteristic includes:
capturing at least one key video clip in the candidate video clip according to the first character identification characteristic, a character characteristic in the key video clip being matched with the first character identification characteristic;
determining quality scores of respective video clips according to one or more items of information from expressions, motions, and gestures of a character in the respective key video clips;
determining a key video clip with the highest quality score as a character video clip corresponding to the first preset region.

According to one or more embodiments of the present disclosure, the first information further includes: an identifier of the first transmitting apparatus; acquiring a first character identification characteristic corresponding to the first user includes:
acquiring the first character identification characteristic from a user database according to the identifier of the first transmitting apparatus, wherein the user database is used for storing character identification characteristics corresponding to a plurality of users and identifiers of a transmitting apparatus corresponding to the plurality of users.

According to one or more embodiments of the present disclosure, before the first character identification characteristic from the user database is acquired according to an identifier of the first transmitting apparatus, what is further included as follows:
receiving registration information sent by a terminal device of the first user, the registration information comprising: an identifier of the first transmitting apparatus and the first character identification characteristic;
storing the identifier of the first transmitting apparatus and the first character identification characteristic in the user database.

According to one or more embodiments of the present disclosure, determining the target video template according to the video style characteristic includes:
determining a first preset video template that satisfies the video style characteristic in a plurality of preset video templates according to the video style characteristic, the first preset video template including a plurality of slot positions for filling video materials, effect materials corresponding to respective slot positions and transition materials for linking adjacent slot positions;
obtaining a shooting characteristic by analyzing a character video clip corresponding to the at least one preset region, the shooting characteristic including one or more items of the followings: the number of character video clips, time for shooting, weather, and character type;
obtaining the target video template by adjusting the first preset video template according to the shooting characteristic.

According to one or more embodiments of the present disclosure, generating the target video according to the target video template and a character video clip corresponding to the at least one preset region further includes:
determining a corresponding relationship between a character video clip corresponding to the at least one preset region and each slot position in the target video template;
filling the character video clip corresponding to the at least one preset region to a corresponding slot position of the target video template according to the corresponding relationship, thereby obtaining the target video.

According to one or more embodiments of the present disclosure, before determining the target video template according to the video style characteristic, and generating the target video according to the target video template and the character video clip corresponding to the at least one preset region, the method further includes:
receiving a completed video instruction sent by the terminal device of the first user; or
receiving the completed video instruction sent by a receiving apparatus within the target preset region, wherein the target preset region is a preset region among a plurality of preset regions in the target place.

According to one or more embodiments of the present disclosure, after a target video is generated according to the target video template and the character video clip corresponding to the at least one preset region, the method further includes:
transmitting the target video to the terminal device of the first user.

In a second aspect, according to one or more embodiments of the present disclosure, provided with is a system for video data processing, including: a server and shooting apparatuses deployed within the plurality of preset regions in a target place, respectively;
the shooting apparatuses is configured for video shooting and storing shot video data shot in a video database;
the server is configured for:
   acquiring a first character identification characteristic corresponding to a first user, and acquiring a video style characteristic designated by the first user, the video style characteristic comprising at least one dimension of characteristic among text, tone, effect, or music; and
   acquiring a character video clip corresponding to at least one preset region in the target place from the video database according to the first character identification characteristic, wherein a character video clip corresponding to each preset region is obtained through shooting by a shooting apparatus deployed within the preset region, and a character characteristic in the character video clip is matched with the first character identification characteristic; and
   determining a target video template according to the video style characteristic, and generating a target video according to the target video template and a character video clip corresponding to the at least one preset region.

According to one or more embodiments of the present disclosure, the system further includes: a first transmitting apparatus carried by the first user and receiving apparatuses deployed within the plurality of preset regions, respectively;
the first transmitting apparatus is configured for transmitting a first radio frequency signal;
a receiving apparatus deployed within a first preset region is configured for receiving the first radio frequency signal and transmitting first information to the server, the first information including a reception time of the first radio frequency signal;

The server is specifically configured for acquiring a character video clip corresponding to the first preset region from the video database according to the reception time of the first radio frequency signal and the first character identification characteristic;
wherein the first preset region is a preset region among the plurality of preset regions.

According to one or more embodiments of the present disclosure, the server is specifically configured for:
acquiring first video data shot by a shooting apparatus within the first preset region from the video database according to an identifier of the shooting apparatus within the first preset region;
determining a target time period according to a reception time of the first radio frequency signal, the target time period including a reception time of the first radio frequency signal;
determining a candidate video clip corresponding to the target time period from the first video data according to the target time period;
determining the character video clip corresponding to the first preset region from the candidate video clip according to the first character identification characteristic.

According to one or more embodiments of the present disclosure, the server is specifically used for:
capturing at least one key video clip in the candidate video clip according to the first character identification characteristic, a character characteristic in the key video clip being matched with the first identification characteristic;
determining quality scores of respective key video clips according to one or more pieces of information from expressions, motions, and gestures of a character in respective video clips;
determining a key video clip with the highest quality score as a character video clip corresponding to the first preset region.

According to one or more embodiments of the present disclosure, the first information further includes: an identifier of the first transmitting apparatus;
the server is specifically used for: acquiring the first character identification characteristic from a user database according to the identifier of the first transmitting apparatus; wherein the user database is used for storing a character identification characteristic corresponding to a plurality of users and an identifier of a transmitting apparatus corresponding to the plurality of users.

According to the one or more embodiments of the present disclosure, the first transmitting apparatus is configured with an identification code thereon; the system further includes: a terminal device of the first user.

The terminal device is used for:
obtaining an identifier of the first transmitting apparatus by scanning the identification code, and presenting a registration page, the registration page including a characteristic collection control; and
presenting a characteristic collection page in response to detection of the first user's input operation on the characteristic collection control, collecting an image of the first user on the characteristic collection page, and performing characteristic extraction on the image, thereby obtaining the first character identification characteristic; and
transmitting registration information to the server, the registration information including: an identifier of the first transmitting apparatus and the first character identification characteristic;
the server is further configured for storing the identifier of the first transmitting apparatus and the first character identification characteristic in the user database in response to receipt of the registration information.

According to one or more embodiments of the present disclosure, the server is specifically configured for:
determining a first preset video template that satisfies the video style characteristic in a plurality of preset video templates according to the video style characteristic, the first preset video template including the plurality of slot positions for filling video materials, effect materials corresponding to respective slot positions and transition materials for linking adjacent slot positions.
obtaining a shooting characteristic by analyzing a character video clip corresponding to the at least one preset region, the shooting characteristic including one or more items of the followings: the number of character video clips, time for shooting, weather, and character type;
obtaining the target video template by adjusting the first preset video template according to the shooting characteristic.

According to one or more embodiments of the present disclosure, the server is specifically configured for:
determining a corresponding relationship between a character video clip corresponding to the at least one preset region and each slot position in the target video template;
filling the character video clip corresponding to the at least one preset region in a corresponding slot position of the target video template according to the corresponding relationship, thereby obtaining the target video.

According to one or more embodiments of the present disclosure, the system further includes: a terminal device of the first user;
the server is further configured for transmitting the target video to the terminal device.

According to one or more embodiments of the present disclosure, the terminal device is further configured for:
displaying notify information on the information page in response to receipt of the target video, the notify information including link information of the target video; and
presenting a video display page in response to detection of the first user's click operation on the link information, and displaying the cover of the target video on the video display page; and
presenting a video play page, and playing the target video on the video play page in response the first user's click operation on input of the cover.

According to one or more embodiments of the present disclosure, the video display page includes a download and/or share control, and the terminal device is further configured for:
downloading the target video to a preset storage space in response to detection of the first user's click operation on the download control; and/or
presenting a share page in response to detection of the first user's click operation on the share control, and sending the target video to a terminal device corresponding to other users according to the first user's share operation inputted on the share page.

According to one or more embodiments of the present disclosure, the server is further used for receiving the completed video instruction sent by the terminal device of the first user; or
the service is further used for receiving the completed video instruction sent by a receiving apparatus within the target preset region, wherein the target preset region is a preset region among the plurality of preset regions.

According to one or more embodiments of the present disclosure, the first transmitting apparatus is any one of the following items: bracelets and glasses.

In a third aspect, according to one or more embodiments of the present disclosure, provided with is an apparatus for video data processing, including:
a first acquisition module for acquiring a first character identification characteristic corresponding to a first user, and acquiring a video style characteristic designated by the first user;
a second acquisition module for acquiring a character video clip corresponding to the at least one preset region in the target place from a video database according to the first character identification characteristic, wherein a character video clip corresponding to each preset region is obtained through shooting by a shooting apparatus deployed within the preset region, and a character characteristic in the character video clip is matched with the first character identification characteristic;
a generation module for determining a target video template according to the video style characteristic, and generating a target video according to the target video template and a character video clip corresponding to the at least one preset region.

According to one or embodiments of the present disclosure, the apparatus further includes: a receiving module;
the receiving module is used for receiving first information sent by a receiving apparatus deployed within the first preset region as for any first preset region in the at least one preset region, the first information including a reception time of a first radio frequency signal, the first information being sent to the server after the receiving apparatus receives the first radio frequency signal, the first radio frequency signal being sent by a first transmitting apparatus carried by the first user;
the second acquisition module is specifically used for: acquiring a character video clip corresponding to the first preset region from the video database according to the reception time of the first radio frequency signal and the first character identification characteristic.

According to one or more embodiments of the present disclosure, the second acquisition module is specifically used for:
acquiring first video data obtained through shooting by a shooting apparatus within the first preset region from the video database according to an identifier of the shooting apparatus within the first preset region;
determining a target time period according to a reception time of the first radio frequency signal, the target timer period including the reception time of the first radio frequency signal;
determining a candidate video clip corresponding to the target time period from the first video data according to the target time period;
determining a character video clip corresponding to the first preset region from the candidate video clip according to the first character identification characteristic.

According to one or more embodiments of the present disclosure, the second acquisition module is specifically used for:
capturing at least one key video clip in the candidate video clip according to the first character identification characteristic, a character characteristic in the key video clip being matched with the first character identification characteristic;
determining quality scores of respective key video clips according to one or more items of information from expressions, actions, and gestures of a character in the respective video clips;
determining a key video clip with the highest quality score as a character video clip corresponding to the first preset region.

According to one or more embodiments of the present disclosure, the first information further includes: an identifier of the first transmitting apparatus; the first acquisition module is specifically used for:
acquiring the first character identification characteristic from a user database according to an identifier of the first transmitting apparatus, wherein the user database is used for storing a character identification characteristic corresponding to a plurality of users and the identifier of a transmitting apparatus corresponding to the plurality of users.

According to one or more embodiments of the present disclosure, the receiving module is further used for: receiving registration information sent by a terminal device of the first user, the registration information including: an identifier of the first transmitting apparatus and the first character identification characteristic; storing the identifier of the first transmitting apparatus and the first character identification characteristic in the user database.

According to one or more embodiments of the present disclosure, the generation module is specifically used for:
determining a first preset video template that satisfies the video style characteristic in the plurality of preset video templates according to the video style characteristic, the first preset video template including the plurality of slot positions for filling video materials, effect materials corresponding to respective slot positions and transition materials for linking adjacent slot positions;
obtaining a shooting characteristic by analyzing a character video clip corresponding to the at least one preset region, the shooting characteristic including one or more items of the followings: quantity of character video clip(s), time for shooting, weather, and character type;
adjusting the first preset video template according to the shooting characteristic, thereby obtaining the target video template.

According to one or more embodiments of the present disclosure, the generation module is specifically used for:
determining a corresponding relationship between a character video clip corresponding to the at least one preset region and each slot position in the target video template;
filling the character video clip corresponding to the at least one preset region in a corresponding slot position of the target video template according to the corresponding relationship, thereby obtaining the target video.

According to one or more embodiments of the present disclosure, the apparatus further includes: a receiving module; the receiving module is used for:
receiving a completed video instruction sent by a terminal device of the first user; or
receiving the completed video instruction sent by a receiving apparatus within a target preset region, wherein the target preset region is a preset region in the a plurality of preset regions.

According to one or more embodiments of the present disclosure, the apparatus further includes a sending module for sending the target video to the terminal device of the first user.

In a fourth aspect, according to one or more embodiments of the present disclosure, provided with is an electronic device, including: a processor and a memory;
the memory stores a computer executable instruction;
the processor executes the computer executable instruction to implement the video data processing method as claimed in the first aspect and various possible designs of the first aspect above.

In a fifth aspect, according to one or more embodiments of the present disclosure, provided with is a computer readable storage medium, the computer readable storage medium storing a computer executable instruction therein, and implementing the video data processing method as claimed in the first aspect and various possible designs of the first aspect above when a processor executes the computer executable instruction.

In a sixth aspect, according to one or more embodiments of the present disclosure, provided with is a computer program product which includes a computer executable instruction which, when executed by a processor, implements the video data processing method as claimed in the first aspect and various possible designs of the first aspect above.

In a seventh aspect, according to one or more embodiments of the present disclosure, provided with is a computer program, which, when executed by a processor, implements the video data processing method as claimed in the first aspect and various possible designs of the first aspect above.

Embodiments of the present disclosure provide a video data processing method, device, equipment, system, and a storage medium, which performs video shooting by shooting apparatuses deployed within respective preset regions in the target place, and storing the video data shot in a video database. The server acquires a character video clip corresponding to at least one preset region from the video database according to the first character identification characteristic, and a character characteristic in the character video clip is matched with the first character identification characteristic. Furthermore, the server determines a target video template according to the video style characteristic, and generates a target video according to the target video template and a character video clip corresponding to the at least one preset region. During the processes above, video shooting, editing, and synthesis are automatically completed by the system, which saves the user's time and improves the video processing efficiency on the one hand, while reducing the requirements for the user's video editing skills on the other hand. A character video clip corresponding to the first user is obtained through matching with the first character identification characteristic in the video database, which improves the accuracy of the character video clip acquired, thereby improving the accuracy of the target video. Further, during the process of generating a target video, a video style characteristic designated by the user is further taken into consideration such that the target video satisfies the user's preference in terms of dimensions such as at least one dimension of characteristic among text, tone, effect, and music, which can improve the quality and satisfaction of the target video, and satisfy different users' individual demands.

What are described above are only illustration of better embodiments of the present disclosure and the technical principles adopted. Those skilled in the art should understand that the scope of disclosure involved in the present disclosure is not limited to the technical solutions consisting of specific combinations of the technical features above, and meanwhile, shall also cover other technical solutions formed by any combinations of the technical features above or equivalent features thereof without deviating from the concept of the disclosure above, e.g., the technical solutions of replacing the features above with the technical features with similar functions disclosed in the present disclosure (not exclusive).

Additionally, although respective operations are described with specific orders, this should not be understood as follows: these operations are required to be executed in specific orders or in sequential orders shown. In an environment, multitasking and parallel processing may be possibly beneficial. Similarly, several specific implementation details are included in the discussions above, but these should not be interpreted as limitation to the scope of the present disclosure. Some features described in the context of a single embodiment may also be implemented combinatorially in the single embodiment. In contrary, various features described in the context of a single embodiment may also be implemented in the plurality of embodiments separately or in any appropriate combination manner.

Although languages of logic actions specific for structural features and/or methods are used to describe the subject matter, it should be understood that the subject matter defined in the claims as appended is not inevitably restricted to the specific features or actions described above. In contrary, the specific features and actions described above are only exemplary forms for implementing the claims.

## Claims

1. A method for video data processing, comprising:
acquiring a first character identification characteristic corresponding to a first user, and acquiring a video style characteristic designated by the first user, the video style characteristic comprising at least one dimension of characteristic among text, tone, effect, or music;
acquiring a character video clip corresponding to at least one preset region in a target place from a video database according to the first character identification characteristic, wherein a character video clip corresponding to each preset region is obtained through shooting by a shooting apparatus deployed within the preset region, and a characteristic of the character within the character video clip is matched with the first character identification characteristic;
determining a target video template according to the video style characteristic, and
generating a target video according to the target video template and the character video clip corresponding to the at least one preset region.

2. The method of claim 1, wherein for a first preset region among the at least one preset region, before acquiring the character video clip corresponding to the first preset region from the video database according to the first character identification characteristic the method further comprises:
receiving first information sent by a receiving apparatus deployed within the first preset region, the first information comprising a reception time of a first radio frequency signal; the first information being sent after the receiving apparatus receiving the first radio frequency signal, the first radio frequence signal being sent by a first transmitting apparatus carried by the first user;
acquiring the character video clip corresponding to the first preset region from the video database according to the first character identification characteristic, comprising:
acquiring the character video clip corresponding to the first preset region from the video database according to the reception time of the first radio frequency signal and the first character identification characteristic.

3. The method of claim 2, wherein acquiring the character video clip corresponding to the first preset region from the video database according to the reception time of the first radio frequency signal and the first character identification characteristic, comprises:
acquiring first video data shot by a shooting apparatus within the first preset region from the video database according to an identifier of the shooting apparatus within the first preset region;
determining a target time period according to the reception time of the first radio frequency signal, the target time period comprising the reception time of the first radio frequency signal;
determining a candidate video clip corresponding to the target time period from the first video data according to the target time period;
determining the character video clip corresponding to the first preset region from the candidate video clip according to the first character identification characteristic.

4. The method of claim 2 or 3, wherein the first information further comprises: an identifier of the first transmitting apparatus; acquiring a first character identification characteristic corresponding to the first user comprises:
acquiring the first character identification characteristic from a user database according to the identifier of the first transmitting apparatus; wherein the user database is used for storing character identification characteristics corresponding to a plurality of users and identifiers of the transmitting apparatuses corresponding to the plurality of users.

5. The method of claim 4, wherein before acquiring the first character identification characteristic from the user database according to the identifier of the first transmitting apparatus, the method further comprises:
receiving registration information sent by a terminal device of the first user, the registration information comprising: the identifier of the first transmitting apparatus and the first character identification characteristic;
storing the identifier of the first transmitting apparatus and the first character identification characteristic in the user database.

6. The method of any one of claims 1 to 5, wherein determining the target video template according to the video style characteristic comprises:
determining a first preset video template that satisfies the video style characteristic in a plurality of preset video templates according to the video style characteristic, the first preset video template comprising a plurality of slot positions for filling video materials, effect materials corresponding to respective slot positions and transition materials for linking adjacent slot positions;
obtaining a shooting characteristic by analyzing a character video clip corresponding to the at least one preset region, the shooting characteristic comprising one or more of the followings: the number of character video clips, time for shooting, weather, and character type;
obtaining the target video template by adjusting the first preset video template according to the shooting characteristic.

7. The method of any one of claims 1 to 6, wherein before determining the target video template according to the video style characteristic, and generating the target video according to the target video template and the character video clip corresponding to the at least one preset region, the method further comprises:
receiving a completed video instruction sent by the terminal device of the first user; or
receiving the completed video instruction sent by a receiving apparatus within the target preset region, wherein the target preset region is a preset region among a plurality of preset regions in the target place.

8. The method of any one of claims 1 to 7, wherein after generating a target video according to the target video template and the character video clip corresponding to the at least one preset region, the method further comprises:
transmitting the target video to the terminal device of the first user.

9. A system for video data processing, comprising: a server and shooting apparatuses deployed within a plurality of preset regions in a target place, respectively;
the shooting apparatuses being configured for video shooting and storing shot video data in a video database;
the server being configured for:
acquiring a first character identification characteristic corresponding to a first user, and acquiring a video style characteristic designated by the first user, the video style characteristic comprising at least one dimension of characteristic among text, tone, effect, or music; and
acquiring a character video clip corresponding to at least one preset region in the target place from the video database according to the first character identification characteristic, wherein a character video clip corresponding to each preset region is obtained through shooting by a shooting apparatus deployed within the preset region, and a characteristic of the character within the character video clip is matched with the first character identification characteristic; and
determining a target video template according to the video style characteristic, and
generating a target video according to the target video template and a character video clip corresponding to the at least one preset region.

10. The system of claim 9, wherein the system further comprises: a first transmitting apparatus carried by the first user and receiving apparatuses deployed within the plurality of preset regions, respectively;
the first transmitting apparatus being configured for transmitting a first radio frequency signal;
a receiving apparatus deployed within a first preset region being configured for receiving the first radio frequency signal and transmitting first information to the server, the first information comprising a reception time of the first radio frequency signal;
the server being specifically configured for acquiring the character video clip corresponding to the first preset region from the video database according to the reception time of the first radio frequency signal and the first character identification characteristic;
wherein the first preset region is a preset region among the plurality of preset regions.

11. The system of claim 10, wherein the server is specifically configured for:
acquiring first video data shot by a shooting apparatus within the first preset region from the video database according to an identifier of the shooting apparatus within the first preset region;
determining a target time period according to a reception time of the first radio frequency signal, the target time period comprising the reception time of the first radio frequency signal;
determining a candidate video clip corresponding to the target time period from the first video data according to the target time period;
determining the character video clip corresponding to the first preset region from the candidate video clip according to the first character identification characteristic.

12. The system of claim 10 or 11, wherein the first information further comprises: an identifier of the first transmitting apparatus;
the server is specifically configured for: acquiring the first character identification characteristic from a user database according to the identifier of the first transmitting apparatus; wherein the user database is used for storing character identification characteristics corresponding to the plurality of users and identifier of transmitting apparatuses corresponding to the plurality of users.

13. The system of claim 12, wherein the first transmitting apparatus is configured with an identification code thereon; the system further comprises: a terminal device of the first user;
the terminal device is configured for:
obtaining an identifier of the first transmitting apparatus by scanning the identification code, and presenting a registration page that comprises a characteristic collection control; and
presenting a characteristic collection page in response to a detection of an input operation of the first user on the characteristic collection control, collecting an image of the first user on the characteristic collection page, and obtaining the first character identification characteristic by performing a characteristic extraction on the image; and
transmitting registration information to the server, the registration information comprising: an identifier of the first transmitting apparatus and the first character identification characteristic;
the server is further configured for storing the identifier of the first transmitting apparatus and the first character identification characteristic in the user database in response to a receipt of the registration information.

14. The system of any one of claims 9 to 13, wherein the server is specifically configured for:
determining a first preset video template that satisfies the video style characteristic in the plurality of preset video templates according to the video style characteristic, the first preset video template comprising the plurality of slot positions for filling video materials, effect materials corresponding to respective slot positions and transition materials for linking adjacent slot positions;
obtaining a shooting characteristic by analyzing a character video clip corresponding to the at least one preset region, the shooting characteristic comprising one or more items of the followings: the number of character video clips, time for shooting, weather, and character type;
adjusting the first preset video template according to the shooting characteristic, thereby obtaining the target video template.

15. The system of any one of claims 9 to 14, wherein the system further comprises: a terminal device of the first user;
the server is further configured for transmitting the target video to the terminal device.

16. The system of any one of claims 9 to 15, wherein
the server is further configured for receiving a completed video instruction sent by a terminal device of the first user; or
the server is further configured for receiving the completed video instruction sent by a receiving apparatus within a target preset region, wherein the target preset region is a preset region among the plurality of preset regions.

17. An apparatus for video data processing, comprising:
a first acquisition module for acquiring a first character identification characteristic corresponding to a first user, and acquiring a video style characteristic designated by the first user;
a second acquisition module for acquiring a character video clip corresponding to at least one preset region from a video database according to the first character identification characteristic, wherein a character video clip corresponding to each preset region is obtained through shooting by a shooting apparatus deployed within the preset region, and a character characteristic in the character video clip is matched with the first character identification characteristic;
a generation module for determining a target video template according to the video style characteristic, and generating a target video according to the target video template and a character video clip corresponding to the at least one preset region.

18. An electronic device, comprising: a processor and a memory;
the memory storing a computer executable instruction;
the processor executing the computer executable instruction so as to implement the method for video data processing in any one of claims 1 to 8.

19. A computer readable storage medium, wherein the computer readable storage medium stores a computer executable instruction therein, and implements the method for video data processing in any one of claims 1 to 8 when a processor executes the computer executable instruction.

20. A computer program product, comprising a computer program, wherein the computer program implements the method for video data processing in any one of claims 1 to 8 when the computer program is executed by a processor.

21. A computer program, wherein the computer program implements the method for video data processing in any one of claims 1 to 8 when the computer program is executed by a processor.
